(19) Europäisches Patentamt
European Patent Office
Office européen des brevets

(11) EP 0 710 270 B1

(12) **EUROPÄISCHE PATENTSCHRIFT**

(45) Veröffentlichungstag und Bekanntmachung des Hinweises auf die Patenterteilung:
**02.01.1997 Patentblatt 1997/01**

(21) Anmeldenummer: **94918352.9**

(22) Anmeldetag: **20.05.1994**

(51) Int Cl.6: **C10G 1/10**, C10G 1/00

(86) Internationale Anmeldenummer:
**PCT/EP94/01647**

(87) Internationale Veröffentlichungsnummer:
**WO 95/03375 (02.02.1995 Gazette 1995/06)**

(54) **VERFAHREN ZUM RECYCLEN VON KUNSTSTOFFABFÄLLEN IN EINEM STEAMCRACKER**

PROCESS FOR RECYCLING PLASTICS IN A STEAM CRACKER

PROCEDE DE RECYCLAGE DE MATIERES PLASTIQUES DANS UN VAPOCRAQUEUR

(84) Benannte Vertragsstaaten:
**BE DE ES FR GB IT NL SE**

(30) Priorität: **20.07.1993 DE 4324112**
**10.01.1994 DE 4400366**

(43) Veröffentlichungstag der Anmeldung:
**08.05.1996 Patentblatt 1996/19**

(73) Patentinhaber: **BASF AKTIENGESELLSCHAFT**
**67056 Ludwigshafen (DE)**

(72) Erfinder:
- **STABEL, Uwe**
  **D-68535 Edingen-Neckarhausen (DE)**
- **WOERZ, Helmut**
  **D-68219 Mannheim (DE)**
- **KOTKAMP, Ruediger**
  **D-67117 Limburgerhof (DE)**
- **FRIED, Andreas**
  **D-67240 Bobenheim-Roxheim (DE)**

(56) Entgegenhaltungen:
EP-A- 0 567 292     WO-A-93/18112

**Beschreibung**

Die Erfindung betrifft ein Verfahren zum Recyclen von Kunststoffen in einem Steamcracker.

Mittels des erfindungsgemäßen Verfahrens können Kunststoffe, beispielsweise reine polymere Kunststoffabfälle, gemischte Kunststoffabfälle oder Folienabfälle, einschließlich eventueller Verschmutzungen, Aufklebematerialien, Füllstoffen, Inhaltsresten etc., in hochwertige Einsatzstoffe für den bekannten Steamcrackerprozeß umgewandelt werden. Diese Einsatzstoffe werden wiederum in dem bekannten Steamcrackerprozeß in Spaltprodukte wie Ethylen, Propylen, C4-Gemische, Pyrolysebenzin etc. umgewandelt, wobei dieselben in nahezu gleicher oder sogar höherer Ausbeute anfallen, als wenn der Steamcracker mit den traditionellen Einsatzstoffen wie Naphtha, Liquid Petroleum Gas (LPG) und Gasöl gefahren wird. Mittels des erfindungsgemäßen Verfahrens ist es daher möglich, in dem Steamcrackerprozeß die oben erwähnten traditionellen Einsatzstoffe durch aus Kunststoffabfällen gewonnene Einsatzstoffe zu ersetzen, wobei eine Zumischung von Naphtha, LPG oder Gasöl zu den aus Kunststoffabfällen gewonnenen Einsatzstoffen nicht notwendig ist.

Mit dem erfindungsgemäßen Verfahren wird daher ein wesentlicher volkswirtschaftlicher Beitrag zum Recyclen von Kunststoffen geleistet.

Unter dem bekannten Steamcrackerprozeß wird üblicherweise eine Verdampfung und Aufheizung der Einsatzstoffe bei Temperaturen bis 650°C mit anschließender Behandlung bei im allgemeinen 700 bis 1100°C, beispielsweise 780 bis 860°C, im Verlaufe von üblicherweise 0,02 bis 10 Sekunden, beispielsweise 0,1 bis 2 Sekunden in Gegenwart von Dampf verstanden.

Bekanntermaßen bestehen die im Müll anfallenden Kunststoffabfälle zu ca. 70 Gew.-% aus Polyolefinen wie Polyethylen und Polypropylen, zu ca. 15 Gew.-% aus Styrolpolymerisaten, zu ca. 10 Gew.-% aus PVC und in geringen untergeordneten Mengen von ca. 5 Gew.-% aus anderen Kunststoffen wie Polyurethan, Polyester und Polyamid. Diese Kunststoffabfälle sind im allgemeinen verschmutzt, d.h. sie enthalten noch Aufklebermaterialien, Füllstoffe, Inhaltsreste u.a. Die Kunststoffabfälle werden üblicherweise sortiert und fallen daher in verschiedenen an sich bekannten Fraktionen an. Genannt sei die Flaschen- oder auch Hohlkörperfraktion, bestehend aus Flaschen, Behältern etc., die im wesentlichen aus Polyolefinen wie Polyethylen oder Polypropylen bestehen, eine Mixed Plastic Fraktion, bestehend im wesentlichen aus Polyethylen (PE), Polypropylen (PP), Styrolpolymerisat wie Polystyrol (PS) und Polyvinylchlorid (PVC); eine Folienfraktion, bestehend im wesentlichen aus PE und PP etc. und eine Leichtfraktion, bestehend im wesentlichen aus PE, PP und PS, jeweils eventuell mit anhaftenden Verschmutzungen, Aufklebematerialien, Füllstoffen, Inhaltsresten etc.. Im wesentlichen heißt dabei, daß die Fraktionen andere als die genannten Kunststoffe nur in untergeordneten Mengen, beispielsweise weniger als 10 Gew.-%, in vielen Fällen weniger als 5 Gew.-%, und insbesondere weniger als 2 Gew.-% enthalten.

Um Kunststoffabfälle in weiterzuverarbeitende Produkte umzuwandeln, sind eine Reihe von Verfahren bekannt und in der Patentliteratur beschrieben, so beispielsweise katalytische bzw. thermische Verfahren, Hydrocrackverfahren, Extruderverfahren etc. Beispielsweise ist in der Europ. Patentanmeldung 0 502 618 ein Verfahren beschrieben, in dem Kunststoffabfälle, speziell Polyolefine, in niedere Kohlenwasserstoffe umgewandelt werden. Hierbei werden obige Kunststoffabfälle in einer Wirbelbettapparatur bei einer Temperatur von ca. 300-630°C umgesetzt. Die dabei anfallenden niederen Kohlenwasserstoffe, wie Paraffine oder Wachse, können mittels des bekannten Steamcrackerverfahrens in Olefine umgewandelt werden. Durch die Kombination Wirbelbettapparat/-bekanntes Steamcrackerverfahren können Kunststoffabfälle in obige Olefine umgewandelt werden.

Als Nachteil bei diesem Verfahren ist ersichtlich, daß den gewonnenen Einsatzstoffen für den Steamcrackerprozeß Naphtha zugegeben werden muß, also die Umwandlung der Kunststoffabfälle in Spaltprodukte wie Ethylen, Propylen etc. gelingt nicht ohne Zugabe von traditionellen Einsatzstoffen. Des weiteren erweist sich das Feststoffhandling in der Wirbelschicht stets als nachteilig. Außerdem ist die Vergrößerung eines solchen Verfahrens in eine großtechnische Größenordnung problematisch.

In der am 16. September 1993 veröffentlichten Patentanmeldung WO 93/18112 wird ein Verfahren zur Herstellung von Olefinen aus Kunststoffabfällen durch Einstellung einer gewünschten Viskosität durch thermische Vorbehandlung der Kunststoffabfälle in einem Temperaturbereich von 380 bis 680°C und anschließende thermische Behandlung des Produktes bei einer Temperatur von 700 bis 1100°C beschrieben. Das Verfahren betrifft keine destillative Auftrennung des Produktes. Das Verfahren kann kein rückstandsfrei verdampfbares Produkt erzeugen.

Es stellte sich die Aufgabe, ein Verfahren bereitzustellen, das großtechnisch einsetzbar ist, mit dem Kunststoffabfälle in hochwertige Einsatzstoffe für einen gegebenenfalls schon vorhandenen Steamcracker umgewandelt werden, damit aus diesen Einsatzstoffen ohne Zugabe von beispielsweise Naphtha, LPG und Gasöl in dem Steamcrackerprozeß Spaltprodukte wie Ethylen, Propylen, $C_4$-Gemische und Pyrolysebenzin mit hoher Ausbeute gewonnen werden können.

Diese Aufgabe wird dadurch gelöst, daß man eine aus Kunststoffabfällen erhaltene Schmelze bei 400 bis 550°C in Produkte umwandelt, aus den Produkten eine Destillatfraktion bei 180 bis 280°C, bevorzugt bei 220 bis 260°C und insbesondere bei 230 bis 250°C abtrennt und diese als Einsatzstoff einem Steamcracker zuführt.

Eine vorteilhafte Ausprägung des Verfahrens ist durch nachstehende Verfahrensmerkmale gekennzeichnet:

- Aufschmelzen der Kunststoffabfälle im allgemeinen bei 280 bis 380°C,

- Zuführen der Schmelze in einen Reaktor, wobei bei 400 bis 550°C die Polymere in Produkte umgewandelt werden, die im Steamcracker in herkömmlicher Weise verdampft und gespalten werden können,

- destillatives Abtrennen einer Destillatfraktion bei 200 bis 280, bevorzugt 220 bis 260 und insbesondere 230 bis 250°C aus den Produkten,

- Rückführen der übrigen Produkte in den Reaktor bis auf Rückstände und Feststoffe und gegebenenfalls anorganische Säuren und eventuell Aromaten und

- Einleiten der abgetrennten Destillatfraktion, gegebenenfalls nach weiterer Trennung, als Einsatzstoff in den Steamcracker.

In manchen Fällen hat es sich als vorteilhaft herausgestellt, aus der Destillatfraktion Aromaten wie Ethylbenzol und Styrol abzutrennen, bevor sie im Steamcracker eingesetzt wird. Dies kann mit bekannten Methoden wie Extrahieren oder Destillieren geschehen. Die Aromaten können dann einer gesonderten Verwendung zugeführt werden, beispielsweise direkt der Aromatenfraktion (Pyrolysebenzin) der Produkte des Steamcrackers zugesetzt werden.

Das Verfahren wird mit Vorteil für Hohlkörperfraktionen und Folien-fraktionen eingesetzt. Das Aufschmelzen der Kunststoffabfälle erfolgt dabei vorzugsweise bei 280 bis 350°C, in manchen Fällen bei 300 bis 350°C, insbesondere 290 bis 320°C und die Umwandlung im Reaktor bei 400 bis 450°C.

Bevorzugt werden zur Abtrennung der Destillatfraktion oder -fraktionen folgende Verfahrensschritte benutzt:

- Trennen der Produkte mittels einer direkt dem Röhrenofen nachgeschalteten 1. Kolonne, in

  - ein bei 300 bis 420°C, insbesondere 330 bis 380°C anfallendes Sumpfprodukt, das nach Ausschleusen der Rückstände und Feststoffe in den Reaktor zurückgeführt wird, und in

  - ein bei 200 bis 280°C, bevorzugt 220 bis 260°C, insbesondere 230 bis 250°C anfallendes Kopfprodukt, das nach partieller Kondensation einer 2. Kolonne bei 70 bis 150, insbesondere 100 bis 120°C zugeführt wird,

- Trennen des nach der partiellen Kondensation anfallenden Flüssigkeits-/Gasgemisches mittels obiger 2. Kolonne, in

  - ein am Sumpf der 2. Kolonne im allgemeinen bei 50 bis 100°C austretendes Flüssigkeitsgemisch, das einerseits als Rücklauf für die 1. Kolonne verwendet wird und andererseits als Einsatzstoff für den Steamcracker verwendet wird, und in

- ein am Kopf der 2. Kolonne im allgemeinen bei 20 bis 80°C austretendes Gasgemisch, das als Einsatzstoff für den Steamcracker verwendet wird.

Finden sich in den Kunststoffabfällen nennenswerte Anteile, d.h. üblicherweise mehr als 5 Gew.-%, an chlorhaltigem Kunststoff wie Polyvinylchlorid und/oder aromatenhaltigem Kunststoff wie Styrolpolymerisat, wie beispielsweise in einer Mixed Plastic Fraktion, so hat es sich als vorteilhaft herausgestellt, die Kunststoffabfälle bei 330 bis 380, insbesondere 320 bis 350°C, aufzuschmelzen, wobei gleichzeitig das Polyvinylchlorid dehydrohalogeniert wird, und die Umwandlung im Reaktor bei 410 bis 530, bevorzugt 420 bis 480°C, insbesondere 430 bis 480°C in Produkte durchzuführen. Diese können im Steamcracker in herkömmlicher Weise verdampft und gespalten werden.

Zur Dehydrohalogenierung reicht bei den verwendeten Temperaturen im allgemeinen eine Verweilzeit von 1 Stunde bis 20 Stunden. Die benötigte Zeit hängt vom gewünschten Dehydrohalogenierungsgrad ab und läßt sich vom Fachmann durch einfache Vorversuche leicht ermitteln. In manchen Fällen, insbesondere wenn die Dehydrohalogenierung nach dem Aufschmelzen, beispielsweise bei 250 bis 300°C, weitergeführt wird, kann die gewünschte Verweilzeit bis ca. 5 Tage betragen. Dieses kann vorteilhafterweise während einer Zwischenlagerung geschehen.

Bevorzugt werden zur Abtrennung der Destillatfraktion folgende Verfahrensschritte benutzt:

- Trennen der Produkte mittels einer direkt dem Reaktor nachgeschalteten 1. Kolonne, in

- ein bei 330 bis 450, insbesondere 350 bis 400°C anfallendes Sumpfprodukt, das nach Ausschleusen der Rückstände und Feststoffe in den Reaktor zurückgeführt wird, und in

- ein bei 200 bis 280, insbesondere 230 bis 250°C anfallendes Kopfprodukt, das nach partieller Kondensation einer 2. Kolonne bei 70 bis 150, insbesondere 100 bis 120°C zugeführt wird,

- Trennen des nach der partiellen Kondensation anfallenden Flüssigkeits-/Gasgemisches mittels obiger 2. Kolonne, in

- ein am Sumpf der 2. Kolonne im allgemeinen bei 50 bis 100°C austretendes Flüssigkeitsgemisch, das einerseits als Rücklauf für die 1. Kolonne verwendet wird, und andererseits einer zur Abtrennung von Aromaten geeigneten Destillations- oder Extraktionseinheit zugeführt wird, und in

- ein am Kopf der 2. Kolonne im allgemeinen bei 20 bis 80°C austretendes Gasgemisch, das als Einsatzstoff für den Steamcracker verwendet wird.

Das der obigen Destillations- oder Extraktionseinheit zugeführte Flüssigkeitsgemisch wird im allgemeinen in

- eine Flüssigfraktion, die als Einsatzstoff für den Steamcracker verwendet wird, und in

- eine Aromatenfraktion aufgetrennt.

Die Kondensationswärme des Kopfproduktes aus der ersten Kolonne kann zur Erzeugung von Wasserdampf verschiedener Drucke verwendet werden.

Das Aufschmelzen der Kunststoffabfälle kann in geeigneten Apparaturen erfolgen, die einen ausreichenden Wärmeübergang und die erforderliche Durchmischung gewährleisten. Bewährt hat sich der Rührbehälter wie Rührkessel oder insbesondere Intensivrührkessel, der mit Heizmantel und/oder Innenheizung ausgestattet sein kann. Üblicherweise ist der Aufschmelzvorgang relativ rasch, d.h. nach 0,5 bis 30 Minuten, abgeschlossen. Vorteilhafterweise, beispielsweise wenn dehydrohalogeniert wird, werden mehrere dieser Rührbehälter, z.B. zwei oder drei, in Kaskade betrieben.

Als Reaktor zur Umwandlung der Schmelze in Produkte können gebräuchliche Apparaturen wie Rührbehälter oder Extruder eingesetzt werden. Vorteilhaft ist ein Röhrenofen. In vielen Fällen hat es sich als günstig erwiesen, einen Teil der den Röhrenofen verlassenden Reaktionsprodukte zur Erhöhung der Verweilzeit dem Röhrenofen wieder zuzuführen. Bei dieser Fahrweise findet die Umwandlungsreaktion zu den Produkten je nach den Temperatur- und Verweilzeitverhältnissen zum Teil in der dafür verwendeten Rückführleitung, gegebenenfalls in einem Verweilzeitbehälter, statt. Bei dem Röhrenofen handelt sich allgemein um einen Wärmetauscher, in dem aus der außerhalb der Röhren befindlichen Gasphase Wärme in den in den Röhren befindlichen Stoff, beispielsweise die Schmelze, übertragen wird. Mit Vorteil kann man einen Reformerofen, Kokerofen, Raffinerieofen oder insbesondere einen Röhrenspaltofen einsetzen, wie er beispielsweise im Steamcracker eingesetzt wird (s. z.B. Ullmanns Encyklopädie der technischen Chemie, 4. Auflage, Band 3, S. 476 und S. 330/331).

Die Umwandlung in die Produkte geschieht vorteilhafterweise unter Luftausschluß, beispielsweise unter Stickstoff, so daß Oxidationen während der Pyrolyse vermieden werden.

Rückstände und Feststoffe im Sinne dieser Erfindung sind solche Stoffe, die bei der destillativen Abtrennung zurückbleiben und, falls überhaupt, nicht unter 500°C sieden. Es handelt sich beispielsweise um den Kunststoffabfällen anhaftende Verunreinigungen, Papierrückstände, Verkokungsprodukte, Glas- und Metallreste, Sand, Pigmentreste, Füllstoffe oder ähnliches.

Beim erfindungsgemäßen Verfahren hat es sich als vorteilhaft erwiesen, das Sumpfprodukt der ersten Kolonne zumindest teilweise als Heizmedium durch den Heizmantel des Aufschmelzbehälters zu führen, bevor es wieder dem Reaktor zugeführt wird. Die mittlere Verweilzeit im Reaktor ist üblicherweise von 0,05 bis 10 Stunden.

Das erfindungsgemäße Verfahren wird im allgemeinen bei einem Druck von 0,8 bis 2,0 bar, bevorzugt bei Atmosphärendruck, also 1 bar, durchgeführt. Die angegebenen Siedepunkte oder Siedebereiche beziehen sich auf 1 bar.

Die Kunststoffabfälle können ungetrocknet oder trocken eingesetzt werden. Je nach Dimensionen der Aufschmelzanlage und ihrer Zuführungsorgane kann es erforderlich sein, die Kunststoffabfälle durch allgemein bekannte Methoden wie Shreddern oder Mahlen zu zerkleinern. Mit mittleren Teilchengrößen von 2 bis 10 mm werden gute Ergebnisse erzielt. Teilchengrößen von 1 bis 10 cm, in einigen Fällen auch unzerkleinerte Kunststoffabfälle, sind ebenfalls geeignet.

Weitere Merkmale des erfindungsgemäßen Verfahrens sind Gegenstand der Unteransprüche.

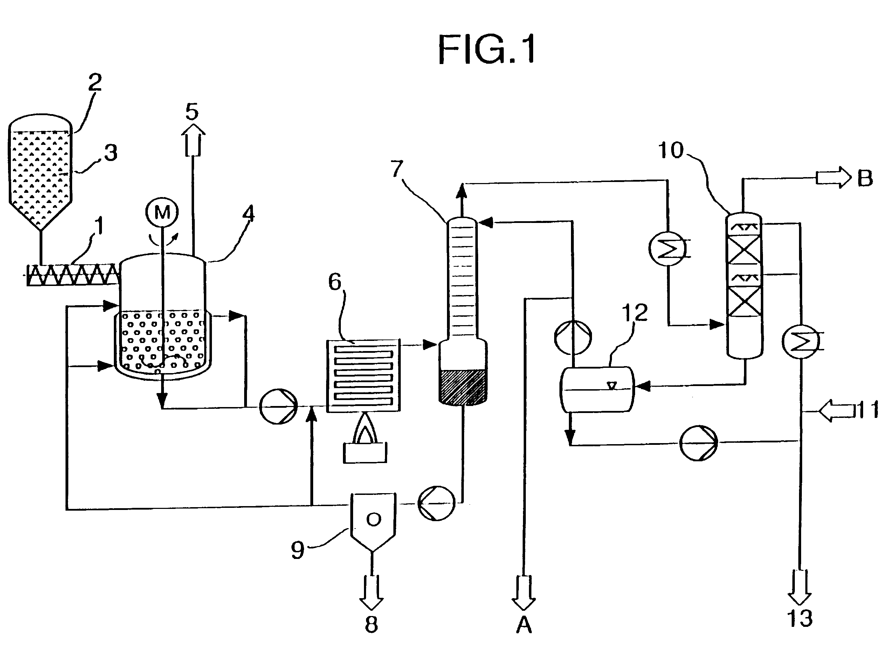

Das erfindungsgemäße Verfahren wird beispielhaft anhand eines vereinfachten Verfahrensschemas nachstehend detailliert beschrieben; Figur 1.

Über ein Förderorgan 1 - beispielsweise eine Förderschnecke-werden trockene und zerkleinerte Kunststoffabfälle 2, beispielsweise eine Hohlkörperfraktion, aus einem Lagerbehälter 3 einem mit einem Heizmantel ausgerüsteten Rührbehälter 4 zugeführt. In diesem Rührbehälter werden die Kunststoffabfälle bei ca. 300°C in eine leicht pumpbare Schmelze übergeführt. Dabei findet eventuell eine Dehydrohalogenierung statt, falls durch Sortierfehler der Kunststoffabfälle ein Schlupf an PVC enthalten ist. Eventuell entstehende HCl 5 wird mittels Wasser nach bekannten Verfahren - nicht erfindungsrelevant - in wäßrige HCL übergeführt, diese kann anderen Produktionsverfahren zugeführt oder mit NaOH neutralisiert werden. Obige Schmelze wird mittels einer Pumpe - Zwangsumlauf - einem Röhrenspaltofen 6 (im weiteren Spaltofen genannt) zugeführt. In diesem Spaltofen werden die Polymere ohne Zusatz von Wasserstoff, Dampf, Katalysatoren, Lösungs- oder Verdünnungsmitteln in Produkte umgewandelt, die im Steamcracker in herkömmlicher Weise verdampft und gespalten werden können. Hierbei erfolgt bei ca. 420°C eine thermische Flüssigspaltung, des weiteren findet im Spaltofen eventuell die Restdehydrohalogenierung statt. Die notwendige Wärme wird extern, beispielsweise durch Öl- oder Gasheizung, zugeführt. Das den Spaltofen verlassende Flüssigkeits-Dampfgemisch wird direkt einer Kolonne 7, beispielsweise einer Verstärkungskolonne, zugeführt. Als Sumpfprodukt werden bei ca. 350°C die höher siedenden, nicht in kurzkettige Kohlenwasserstoffe umgewandelten Produkte abgezogen. Diese werden einerseits direkt in den Spaltofen zurückgeführt und andererseits als Wärmeträger durch die Schmelze in dem Rührbehälter und durch den Heizmantel des Rührbehälters geleitet und letztendlich in den Spaltofen zurückgeführt. Aus obigem Sumpfprodukt werden nach Austritt aus der Kolonne Rückstände und Feststoffe 8 ausgeschleust, beispielsweise mittels eines Hydrozyklons 9. Das am Kopf der Kolonne bei ca. 240°C austretende Dampfgemisch wird nach einer partiellen Kondensation einer weiteren Kolonne 10, beispielsweise einer Füllkörperkolonne, bei ca. 110°C, zugeführt. Das in die Füllkörperkolonne eintretende Flüssigkeits-/Gasgemisch wird mit Wasser oder wäßriger NaOH 11 im Gegenstrom ausgewaschen; eventuell noch im Gas enthaltene HCl wird als wäßrige HCl oder wäßrige NaCl-Lösung mit dem Flüssigkeitsgemisch am Sumpf ausgeschleust. Das am Sumpf austretende Flüssigkeitsgemisch = organische Flüssigkeit/wäßrige HCl oder wäßrige NaCl-Lösung wird in einem nachgeschalteten Phasentrenngefäß 12 getrennt. Die spezifisch leichtere, organische Phase wird einerseits als Einsatzstoff A für den Steamcracker aus dem Prozeß ausgeschleust und andererseits als Rücklauf der Kolonne zugefahren. Die spezifisch schwerere, wäßrige Phase, eventuell angereichert mit HCl oder NaCl 13, wird aus dem Prozeß ausgeschleust. Das am Kopf der Füllkörperkolonne austretende HCl-freie Gasgemisch wird ebenfalls als Einsatzstoff B dem Steamcracker zugefahren.

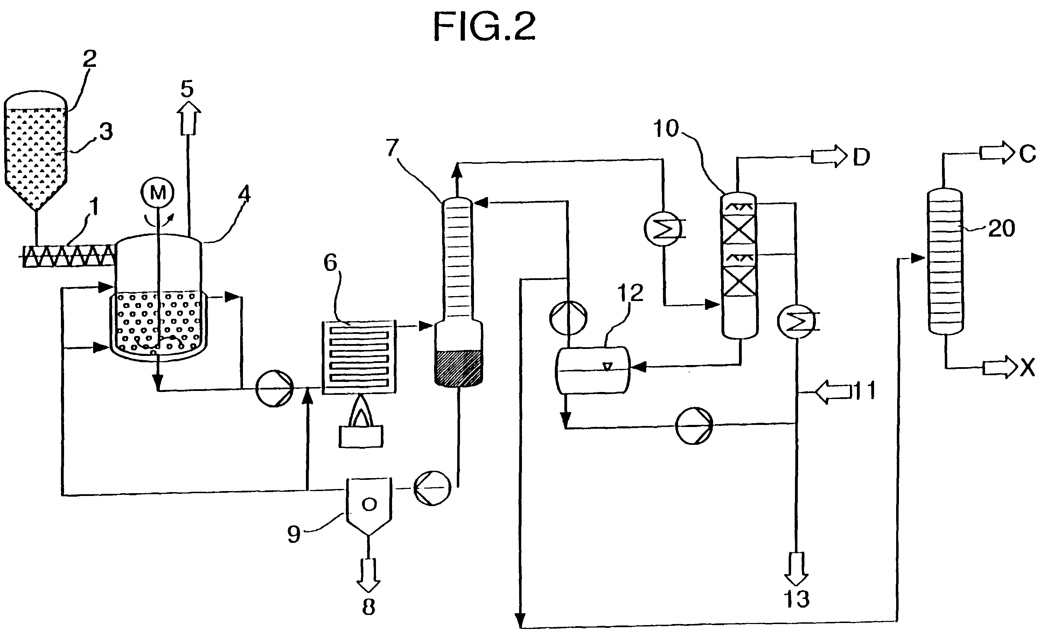

Des weiteren gilt - bezogen auf das vereinfachte Verfahrensschema - beispielsweise für eine Mixed Plastic Fraktion, Figur 2:

Über ein Förderorgan 1 - beispielsweise eine Förderschnecke-werden zerkleinerte, trockene Kunststoffabfälle 2, beispielsweise eine Mixed Plastic Fraktion, aus einem Lagerbehälter 3 einem mit einem Heizmantel ausgerüsteten Rührbehälter 4 zugeführt. In diesem Rührbehälter werden die Kunststoffabfälle bei ca. 350°C in eine leicht pumpbare Schmelze übergeführt. Dabei findet eine Dehydrohalogenierung bis zu 98-99 % statt, bezogen auf den Chlorgehalt im PVC. Das entstehende HCl 5 wird mittels Wasser nach bekannten Verfahren - nicht erfindungsrelevant - in wäßrige HCl übergeführt, diese kann anderen Produktionsverfahren zugeführt oder mit NaOH neutralisiert werden. Obige Schmelze wird mittels einer Pumpe - Zwangsumlauf - einem Spaltofen 6 zugeführt. In diesem Spaltofen werden die Polymere ohne Zusatz von Wasserstoff, Dampf, Katalysatoren, Lösungs- oder Verdünnungsmitteln in Produkte umgewandelt, die im Steamcracker in herkömmlicher Weise verdampft und gespalten werden können. Hierbei erfolgt bei ca. 450°C eine thermische Flüssigspaltung, des weiteren findet im Spaltofen die Restdehydrohalogenierung statt. Die notwendige Wärme wird extern, beispielsweise durch Öl- oder Gasheizung, zugeführt. Das den Spaltofen verlassende Flüssigkeits-Dampfgemisch wird direkt einer Kolonne 7, beispielsweise einer Verstärkungskolonne, zugeführt. Als Sumpfprodukt werden bei ca. 380°C die höher siedenden, nicht in kurzkettige Kohlenwasserstoffe umgewandelten Produkte abgezogen. Diese werden einerseits direkt in den Spaltofen zurückgeführt und andererseits als Wärmeträger durch die Schmelze in dem Rührbehälter und durch den Heizmantel des Rührbehälters geleitet und letztendlich in den Spaltofen zurückgeführt. Aus obigem Sumpfprodukt werden nach Austritt aus der Kolonne Rückstände und Feststoffe 8 ausgeschleust, beispielsweise mittels eines Hydrozyklons 9. Das am Kopf der Kolonne bei ca. 240°C austretende Dampfgemisch wird nach einer partiellen Kondensation einer weiteren Kolonne 10, beispielsweise einer Füllkörperkolonne, bei ca. 110°C, zugeführt. Das in die Füllkörperkolonne eintretende Flüssigkeits-/Gasgemisch wird mit Wasser oder wäßriger NaOH 11 im Gegenstrom ausgewaschen; die im Gas enthaltene HCl wird als wäßrige HCl oder wäßrige NaCl-Lösung mit dem Flüssigkeitsgemisch am Sumpf ausgeschleust. Das am Sumpf austretende Flüssigkeitsgemisch = organische Flüssigkeit/wäßrige HCl oder wäßrige NaCl-Lösung wird in einem nachgeschalteten Phasentrenngefäß 12 getrennt. Die spezifisch leichtere, organische Phase - siehe Tabelle 11 - wird einerseits einer zur Abtrennung von Aromaten geeigneten Destillations- oder Extraktionseinheit 20 zugeführt und andererseits als Rücklauf der Kolonne zugefahren. Die spezifisch schwerere, wäßrige Phase, angereichert mit HCl oder NaCl 13, wird aus dem Prozeß ausgeschleust. Das am Kopf der Füllkörperkolonne austretende HCl-freie Gasgemisch wird als Einsatzstoff D dem Steamcracker zugefahren. Die obiger Destillations- oder Extraktionseinheit zugeführte organische Flüssigkeit wird einerseits in den Einsatzstoff C für den Steamcracker und andererseits in eine Aromatenfraktion X in einer Kolonne 20 getrennt; beide Fraktionen werden aus dem Verfahren ausgeschleust.

Es versteht sich von selbst, daß wenn die aufgezeigten Verfahrensmerkmale durch einen Fachmann im Rahmen der üblichen Verfahrenstechnik abgewandelt werden, die grundlegenden, erfinderischen Tätigkeiten erhalten bleiben.

Die erhaltenen Einsatzstoffe können im Steamcracker in herkömmlicher Weise verdampft und gespalten werden.

Das erfindungsgemäße Verfahren hat u.a. den Vorteil, daß bei Betreiben des Steamcrackers mit dem aus den Kunststoffabfällen erhaltenen Wertprodukt Heizenergie gegenüber Naphtha als Einsatzstoff eingespart werden kann. Es kommt ohne Zusatz von Wasserstoff, Verdünnungs- oder Lösungsmitteln aus und arbeitet praktisch drucklos. Weiterhin hat das Verfahren den Vorteil, den Steamcracker mit rückstandsfrei verdampfbaren Einsatzstoffen zu versorgen.

In manchen Fällen hat es sich als günstig erwiesen, aus den ausgeschleusten Rückständen und Feststoffen 8 durch übliche Vergasung nach bekannten Verfahren wie Shell- oder Texaco-Verfahren (z.B. Ullmanns Encyklopädie der technischen Chemie, 4. Auflage, Band 14, S. 395 bis 397), z.B. in einem Zyklonvergaser, Synthesegas zu erzeugen. Die dabei anfallende Schlacke kann deponiert oder als Bauhilfsstoff eingesetzt werden.

Häufig lassen sich die aus der - für sich allein nicht erfindungsrelevanten - Destillations- oder Extraktionseinheit 20 erhaltenen Aromaten weiterverarbeiten. Es handelt sich im allgemeinen um ein Gemisch aus Styrol, Ethylbenzol, Toluol und Benzol als Hauptbestandteile. Sie können beispielsweise in an sich bekannten Anlagen zur Umsetzung von Ethylbenzol zu Styrol wie in Ullmanns Encyklopädie der technischen Chemie, 4. Auflage, Band 22, S. 293 bis 309, beschrieben als Rohstoff eingesetzt werden. Weiterhin können sie nach Hydrierung der Doppelbindungen in sogenannten Aromatenanlagen, in denen aus einem Gemisch aus Benzol, Toluol und Xylol im wesentlichen Benzol hergestellt wird (Ullmanns Encyklopädie der technischen Chemie, 4. Auflage, Band 8, Seite 383 bis 411), eingesetzt werden.

Beispiel 1

In der oben beschriebenen Anlage der Figur 1 wird eine von der Fa. Duales System Deutschland GmbH, Bonn, Deutschland, erhaltene Hohlkörperfraktion, deren Kunststoffanteil im wesentlichen aus Polyethylen und Polypropylen besteht, einschließlich eventuell anhaftender Verschmutzungen, Aufklebematerialien, Füllstoffen, Inhaltsresten etc. verarbeitet. Die damit entstehenden Einsatzstoffe A (Flüssigkeitsgemisch) und B (Gasgemisch) für den Steamcracker haben die tabellarisch aufgezeigten Zusammensetzungen, Tabellen 1 und 2.

Die damit aus dem Steamcrackerprozeß erhältlichen Spaltprodukte haben die tabellarisch angegebenen Zusammensetzungen; Tabellen 3 und 4. Zum Vergleich sind in diesen beiden letzteren Tabellen jeweils die Zusammensetzungen der Spaltprodukte angegeben, falls der Steamcracker mit dem klassischen Einsatzstoff Naphtha betrieben wird. Beim Vergleich zeigt sich, daß die Ausbeute an Ethylen und Propylen, falls der Steamcracker mit den Einsatzstoffen - gewonnen aus der Hohlkörperfraktion - betrieben wird, höher ist, als wenn der Steamcracker mit Naphtha betrieben wird. Bei der Konversion der Hohlkörperfraktion werden die Kunststoffabfälle wie nachstehend umgewandelt:

| | |
|---|---|
| organisches Flüssigkeitsgemisch = Einsatzstoff A für Steamcracker | = 74,0 Gew.-% |
| HCl-freies Gasgemisch = Einsatzstoff B für Steamcracker | = 16,0 Gew.-% |
| Rückstände (organische, hochsiedende Kohlenwasserstoffe) | = 2,5 Gew.-% |
| Feststoffe (Glührückstände) | = 7,5 Gew.-% |
| | 100,0 Gew.-% |
| damit organischer Anteil = 92,5 Gew.-% | |

Beispiel 2

In der oben beschriebenen Anlage der Figur 2 wird eine von der Fa. Duales System Deutschland GmbH, Bonn, erhaltene Mixed Plastic Fraktion, deren Kunststoffanteil im wesentlichen aus Polyethylen, Polypropylen, Styrolpolymerisat und Polyvinylchlorid besteht, einschließlich eventuell anhaftender Verschmutzungen, Aufklebematerialien, Füllstoffen, Inhaltsresten etc. verarbeitet. Die damit entstehenden Einsatzstoffe C (Flüssigkeitsgemisch) und D (Gasgemisch) für den Steamcracker haben die tabellarisch aufgezeigten Zusammensetzungen, Tabellen 12 und 13.

Die damit aus dem Steamcrackerprozeß erhältlichen Spaltprodukte haben die tabellarisch angegebenen Zusammensetzungen; Tabellen 14 und 15.

Bei der Konversion der Mixed Plastic Fraktion wurden die Kunststoffabfälle wie nachstehend umgewandelt.

```
organisches Flüssigkeitsgemisch
        = Einsatzstoff C für Steamcracker              = 34,2 Gew.-%
HCl-freies Gasgemisch
        = Einsatzstoff D für Steamcracker              = 21,8 Gew.-%
Aromatenfraktion, hauptsächlich
        Ethylbenzol und Styrol                         = 25,8 Gew.-%
Rückstände (organische, hochsiedende


        Kohlenwasserstoffe)                            = 12,0 Gew.-%
Feststoffe (Glührückstände)                            =  5,0 Gew.-%
HCl                                                    =  1,2 Gew.-%
                                                       100,0 Gew.-%
```

damit organischer Anteil = 93,8 Gew.-%

Für die nachstehenden Tabellen gelten folgende Abkürzungen: KW = Kohlenwasserstoffe, NA = Nichtaromaten, EB = Ethylbenzol

Tabelle 1: Hohlkörperfraktion

Einsatzstoff A = Flüssigkeitsgemisch für den Steamcracker, gewonnen aus dem erfindungsgemäßen Verfahren

| Zusammensetzung | [Gew.-%] |
|---|---|
| $C_3$-KW | 0,01 |
| Buten-1 | 0,05 |
| weitere Butene | 0,04 |
| n-Buten | 0,04 |
| Penten-1 | 0,20 |
| weitere Pentene | 0,16 |
| i-Penten | 0,01 |
| n-Penten | 0,32 |
| weitere $C_6$-KW | 0,48 |
| Methylcyclopenten | 0,12 |
| Hexen-1 | 1,79 |
| Methylcyclopentan | 0,07 |
| weitere Hexene | 0,24 |
| n-Hexan | 1,08 |
| Methylcyclohexen | 0,84 |
| weitere $C_7$-KW | 0,86 |
| Hepten-1 | 2,50 |
| Methylcyclohexan | 0,33 |
| n-Heptan | 2,34 |
| Okten-1 | 2,59 |
| weitere $C_8$-KW | 2,59 |
| n-Oktan | 2,63 |
| Nonen-1 | 3,59 |
| weitere $C_9$-KW | 3,42 |
| n-Nonan | 3,02 |
| weitere $C_{10}$-KW | 1,40 |
| Decen-1 | 3,96 |
| n-Decan | 3,34 |
| Undecen-1 | 3,48 |
| weitere $C_{11}$-KW | 1,45 |
| n-Undecan | 2,88 |
| Dodecen-1 | 3,45 |
| weitere $C_{12}$-KW | 1,75 |
| n-Dodecan | 3,41 |

| Zusammensetzung | [Gew.-%] |
|---|---|
| Tridecen-1 | 3,56 |
| weitere $C_{13}$-KW | 2,04 |
| n-Tridecan | 3,73 |
| weitere $C_{14}$-KW | 2,16 |
| Tetradecen-1 | 3,61 |
| n-Tetradecan | 3,64 |
| weitere $C_{15}$-KW | 1,45 |
| Pentadecen-1 | 3,33 |
| n-Pentadecan | 3,58 |
| weitere $C_{16}$-KW | 1,23 |
| Hexadecen-1 | 2,76 |
| n-Hexadecan | 3,58 |
| weitere $C_{17}$-KW | 0,73 |
| Heptadecen-1 | 2,18 |
| n-Heptadecan | 3,43 |
| weitere $C_{18}$-KW | 0,17 |
| Oktadecen-1 | 1,24 |
| n-Oktadecan | 3,07 |
| Summe | 100,00 |

Tabelle 2:

| Hohlkörperfraktion | |
|---|---|
| Einsatzstoff B = Gasgemisch für den Steamcracker, gewonnen aus dem erfindungsgemäßen Verfahren | |
| Zusammensetzung | [Gew.-%] |
| $H_2$ | 0,22 |
| $CH_4$ | 3,65 |
| $C_2H_6$ | 8,89 |
| $C_2H_4$ | 2,76 |
| $C_3H_8$ | 13,16 |
| $C_3H_6$ | 13,78 |
| i-$C_4H_{10}$ | 0,22 |
| n-$C_4H_{10}$ | 9,31 |
| 1-$C_4H_8$ | 7,83 |
| i-$C_4H_8$ | 3,14 |
| 2-$C_4H_8$t | 1,80 |
| 2-$C_4H_8$C | 1,31 |
| $C_4H_6$ | 0,93 |

Tabelle 2:   (fortgesetzt)

| Hohlkörperfraktion | |
|---|---|
| Einsatzstoff B = Gasgemisch für den Steamcracker, gewonnen aus dem erfindungsgemäßen Verfahren | |
| Zusammensetzung | [Gew.-%] |
| $i\text{-}C_5H_{12}$ | 0,47 |
| $n\text{-}C_5H_{12}$ | 11,51 |
| $C_5H_{10}$ | 10,60 |
| Benzol | 0,71 |
| $C_6H_{12}$ | 9,71 |
| Summe | 100,00 |

Tabelle 3:

| Hohlkörperfraktion | | |
|---|---|---|
| Spaltprodukt aus dem Steamcracker | | |
| I) mit dem Einsatzstoff A gemäß erfindungsgemäßen Verfahren | | |
| II) mit Einsatzstoff Naphtha | | |
| Zusammensetzung | Einheit [Gew.-%] | |
| | I | II |
| CO | 0,1 | 0,2 |
| $H_2$ | 0,7 | 1,0 |
| $CH_4$ | 10,7 | 14,6 |
| $C_2H_6$ | 3,6 | 3,1 |
| $C_2H_4$ | 33,1 | 29,9 |
| $C_2H_2$ | 0,4 | 0,5 |
| $C_3H_8$ | 0,4 | 0,4 |
| $C_3H_6$ | 16,8 | 15,2 |
| Propin | 0,2 | 0,3 |
| Propadien | 0,3 | 0,4 |
| $i\text{-}C_4H_{10}$ | 0,0 | 0,0 |
| $n\text{-}C_4H_{10}$ | 0,1 | 0,2 |
| 1-Buten | 2,1 | 1,4 |
| i-Buten | 0,7 | 2,1 |
| 2-Buten(c) | 0,5 | 0,5 |
| 2-Buten(t) | 0,4 | 0,3 |
| $C_4H_6$ | 7,2 | 4,9 |
| $C_5\text{-KW}$ | 5,2 | 4,5 |
| $C_6\text{-}C_8\text{-NA}$ | 1,8 | 2,1 |
| Benzol | 7,8 | 7,9 |
| Toluol | 2,9 | 3,5 |
| EB+Xylole | 0,6 | 1,1 |

Tabelle 3: (fortgesetzt)

| Hohlkörperfraktion | | |
|---|---|---|
| Spaltprodukt aus dem Steamcracker | | |
| Zusammensetzung | Einheit [Gew.-%] | |
| | I | II |
| Styrol | 0,8 | 1,0 |
| $C_9$-KW | 0,7 | 0,9 |
| $C_{10}+$-KW | 3,0 | 4,0 |
| Summe | 100,0 | 100,0 |

Tabelle 4:

| Hohlkörperfraktion | | |
|---|---|---|
| Spaltprodukt - Gasgemisch - aus dem Steamcracker | | |
| I) mit dem Einsatzstoff B gemäß erfindungsgemäßen Verfahren | | |
| II) mit Einsatzstoff Naphtha | | |
| Zusammensetzung | Einheit [Gew.-%] | |
| | I | II |
| CO | 0,2 | 0,2 |
| $H_2$ | 1,0 | 1,0 |
| $CH_4$ | 16,8 | 14,6 |
| $C_2H_6$ | 6,5 | 3,1 |
| $C_2H_4$ | 31,8 | 29,9 |
| $C_2H_2$ | 0,7 | 0,5 |
| $C_3H_8$ | 3,2 | 0,4 |
| $C_3H_6$ | 16,1 | 15,2 |
| Propin | 0,3 | 0,3 |
| Propadien | 0,5 | 0,4 |
| i-$C_4H_{10}$ | 0,0 | 0,0 |
| n-$C_4H_{10}$ | 1,0 | 0,2 |
| 1-Buten | 1,0 | 1,4 |
| i-Buten | 0,9 | 2,1 |
| 2-Buten(c) | 0,4 | 0,5 |
| 2-Buten(t) | 0,3 | 0,3 |
| $C_4H_6$ | 4,9 | 4,9 |
| $C_5$-KW | 2,6 | 4,5 |
| $C_6$-$C_8$-NA | 0,5 | 2,1 |
| Benzol | 6,0 | 7,9 |
| Toluol | 1,7 | 3,5 |
| EB+Xylole | 0,3 | 1,1 |
| Styrol | 0,6 | 1,0 |

Tabelle 4:   (continued)

| Hohlkörperfraktion | | |
|---|---|---|
| Spaltprodukt - Gasgemisch - aus dem Steamcracker | | |
| Zusammensetzung | Einheit [Gew.-%] | |
| | I | II |
| $C_9$-KW | 0,3 | 0,9 |
| $C_{10}$+-KW | 2,3 | 4,0 |
| Summe | 100,0 | 100,0 |

Tabelle 11:      Mixed Plastic Fraktion

Einsatzstoff      für die Destillations- oder Extraktionseinheit
zur Abtrennung der Aromatenfraktion, gewonnen
aus dem erfindungsgemäßen Verfahren

| Zusammensetzung | [Gew.-%] |
|---|---|
| $C_2$-KW | <0,01 |
| $C_3$-KW | 0,14 |
| n-Butan | 0,05 |
| Buten-1 | 0,21 |
| weitere Butene | 0,05 |
| i-Pentan | 0,02 |
| n-Pentan | 1,45 |
| Penten-1 | 0,24 |
| weitere Pentene | 0,36 |
| n-Hexan | 0,57 |
| Hexen-1 | 2,22 |
| weitere Hexene | 0,81 |
| Methylcyclopentan | 0,12 |
| Methylcyclopenten | 0,13 |
| weitere $C_6$-KW | 0,95 |
| Benzol | 2,93 |
| n-Heptan | 1,03 |
| Hepten-1 | 1,15 |
| Methylcyclohexan | 0,09 |
| Methylcyclohexen | 0,94 |
| weitere $C_7$-KW | 1,42 |
| Toluol | 6,72 |
| n-Oktan | 1,02 |
| Okten-1 | 1,43 |
| Ethylcyclohexan | 5,56 |
| Ethylbenzol | 8,84 |
| Para-Xylol | 0,27 |
| Meta-Xylol | 0,20 |
| Ortho-Xylol | 0,36 |
| Styrol | 9,64 |
| weitere $C_8$-KW | 1,37 |
| n-Nonan | 1,83 |
| Nonen-1 | 1,45 |
| i-Propylbenzol | 1,58 |

| Zusammensetzung | [Gew.-%] |
|---|---|
| n-Propylbenzol | 0,40 |
| weitere $C_9$-KW | 4,43 |
| n-Decan | 1,92 |
| Decen-1 | 1,60 |
| weitere $C_{10}$-KW | 1,65 |
| n-Undecan | 1,29 |
| Undecen-1 | 1,36 |
| weitere $C_{11}$-KW | 3,43 |
| n-Dodecan | 1,41 |
| Dodecen-1 | 1,34 |
| weitere 12-KW | 3,93 |
| n-Tridecan | 1,46 |
| Tridecen-1 | 1,53 |
| weitere $C_{13}$-KW | 4,05 |
| n-Tetradecan | 1,43 |
| Tetradecen-1 | 1,31 |
| weitere $C_{14}$-KW | 2,69 |
| n-Pentadecan | 1,40 |
| Pentadecen-1 | 0,78 |
| weitere $C_{15}$-KW | 1,61 |
| n-Hexadecan | 1,44 |
| Hexadecen-1 | 0,59 |
| weitere $C_{16}$-KW | 0,88 |
| n-Heptadecan | 1,32 |
| Heptadecen-1 | 0,28 |
| weitere $C_{17}$-KW | 0,15 |
| n-Oktadecan | 1,05 |
| Oktadecen-1 | 0,03 |
| weitere $C_{18}$-KW | 0,09 |
| n-Nonadecan | |
| Nonadecen-1 | |
| weitere $C_{19}$-KW | |
| Summe | 100,0 |

Tabelle 12:     Mixed Plastic Fraktion

Einsatzstoff C     für den Steamcracker, gewonnen aus dem erfindungsgemäßen Verfahren und der Destillations- oder Extraktionseinheit zur Abtrennung der Aromaten

| Zusammensetzung | [Gew.-%] |
|---|---|
| $C_2$-KW | 0,02 |
| $C_3$-KW | 0,25 |
| n-Butan | 0,10 |
| Buten-1 | 0,37 |
| weitere Butene | 0,10 |
| i-Pentan | 0,04 |
| n-Pentan | 2,54 |
| Penten-1 | 0,42 |
| weitere Pentene | 0,63 |
| n-Hexan | 1,00 |
| Hexen-1 | 3,89 |
| weitere Hexene | 1,40 |
| Methylcyclopentan | 0,19 |
| Methylcyclopenten | 0,21 |
| weitere $C_6$-KW | 1,53 |
| Benzol | 5,11 |
| n-Heptan | 1,42 |
| Hepten-1 | 1,76 |
| Methylcyclohexan | 0,09 |
| Methylcyclohexen | 0,96 |
| weitere $C_7$-KW | 1,46 |
| Toluol | 1,99 |
| n-Oktan | 0,02 |
| Okten-1 | 0,04 |
| Ethylcyclohexan | 5,70 |
| Ethylbenzol | 0,09 |
| Para-Xylol | <0,01 |
| Meta-Xylol | <0,01 |
| Ortho-Xylol | 0,01 |
| Styrol | 0,18 |
| weitere $C_8$-KW | 0,01 |
| n-Nonan | 0,11 |
| Nonen-1 | 0,06 |
| i-Propylbenzol | 0,09 |

| Zusammensetzung | [Gew.-%] |
|---|---|
| n-Propylbenzol | 0,05 |
| weitere $C_9$-KW | 3,55 |
| n-Decan | 1,54 |
| Decen-1 | 0,98 |
| weitere $C_{10}$-KW | 1,01 |
| n-Undecan | 2,20 |
| Undecen-1 | 2,40 |
| weitere $C_{11}$-KW | 5,90 |
| n-Dodecan | 2,50 |
| Dodecen-1 | 2,30 |
| weitere 12-KW | 6,90 |
| n-Tridecan | 2,55 |
| Tridecen-1 | 2,67 |
| weitere $C_{13}$-KW | 7,08 |
| n-Tetradecan | 2,53 |
| Tetradecen-1 | 2,31 |
| weitere $C_{14}$-KW | 4,76 |
| n-Pentadecan | 2,47 |
| Pentadecen-1 | 1.38 |
| weitere $C_{15}$-KW | 2,85 |
| n-Hexadecan | 2,52 |
| Hexadecen-1 | 1,04 |
| weitere $C_{16}$-KW | 1,54 |
| n-Heptadecan | 2,34 |
| Heptadecen-1 | 0,50 |
| weitere $C_{17}$-KW | 0,26 |
| n-Oktadecan | 1,82 |
| Oktadecen-1 | 0,05 |
| weitere $C_{18}$-KW | 0,16 |
| n-Nonadecan | 0,03 |
| Nonadecen-1 | |
| weitere $C_{19}$-KW | |
| Summe | 100,00 |

Tabelle 13:

| Mixed Plastic Fraktion | |
|---|---|
| Einsatzstoff D = Gasgemisch für den Steamcracker, gewonnen aus dem erfindungsgemäßen Verfahren | |
| Zusammensetzung | [Gew.-%] |
| $H_2$ | 1,32 |
| $CH_4$ | 8,29 |
| $C_2H_6$ | 8,94 |
| $C_2H_4$ | 10,40 |
| $C_3H_8$ | 6,95 |
| $C_3H_6$ | 20,49 |
| $i-C_4H_{10}$ | 0,28 |
| $n-C_4H_{10}$ | 2,25 |
| $1-C_4H_8$ | 4,27 |
| $i-C_4H_8$ | 6,77 |
| $2-C_4H_8t$ | 1,65 |
| $2-C_4H_8C$ | 2,32 |
| $C_4H_6$ | 1,20 |
| $i-C_5H_{12}$ | 0,18 |
| $n-C_5H_{12}$ | 10,62 |
| $C_5H_{10}$ | 7,51 |
| Benzol | 1,06 |
| $C_6H_{12}$ | 5,50 |
| Summe | 100,00 |

Tabelle 14:

| Mixed Plastic Fraktion | |
|---|---|
| Spaltprodukt aus dem Steamcracker mit dem Einsatzstoff C gemäß erfindungsgemäßen Verfahren | |
| Zusammensetzung | [Gew.-%] |
| CO | 0,1 |
| $H_2$ | 0,8 |
| $CH_4$ | 11,1 |
| $C_2H_6$ | 3,0 |
| $C_2H_4$ | 27,2 |
| $C_2H_2$ | 0,4 |
| $C_3H_8$ | 0,5 |
| $C_3H_6$ | 13,8 |
| Propin | 0,2 |
| Propadien | 0,3 |
| $i-C_4H_{10}$ | 0 |

Tabelle 14: (fortgesetzt)

| Mixed Plastic Fraktion | |
| --- | --- |
| Spaltprodukt aus dem Steamcracker mit dem Einsatzstoff C gemäß erfindungsgemäßen Verfahren | |
| Zusammensetzung | [Gew.-%] |
| n-$C_4H_{10}$ | 0,1 |
| 1-Buten | 1,5 |
| i-Buten | 1,3 |
| 2-Buten(c) | 0,5 |
| 2-Buten(t) | 0,3 |
| $C_4H_6$ | 5,8 |
| $C_5$-KW | 4,9 |
| $C_6$-$C_8$-NA | 1,7 |
| Benzol | 12,2 |
| Toluol | 5,0 |
| EB+Xylole | 1,0 |
| Styrol | 1,5 |
| $C_9$-KW | 1,2 |
| $C_{10}$+-KW | 5,5 |
| Summe | 100,0 |

Tabelle 15:

| Mixed Plastic Fraktion | |
| --- | --- |
| Spaltprodukt aus dem Steamcracker mit dem Einsatzstoff D gemäß erfindungsgemäßen Verfahren | |
| Zusammensetzung | [Gew.-%] |
| CO | 0,2 |
| $H_2$ | 1,7 |
| $CH_4$ | 19,3 |
| $C_2H_6$ | 6,7 |
| $C_2H_4$ | 31,8 |
| $C_2H_2$ | 0,7 |
| $C_3H_8$ | 2,1 |
| $C_3H_6$ | 16,1 |
| Propin | 0,4 |
| Propadien | 0,6 |
| i-$C_4H_{10}$ | 0,1 |
| n-$C_4H_{10}$ | 0,3 |
| 1-Buten | 0,9 |
| i-Buten | 2,0 |
| 2-Buten(c) | 0,4 |
| 2-Buten(t) | 0,3 |

Tabelle 15: (fortgesetzt)

| Mixed Plastic Fraktion | |
|---|---|
| Spaltprodukt aus dem Steamcracker mit dem Einsatzstoff D gemäß erfindungsgemäßen Verfahren | |
| Zusammensetzung | [Gew.-%] |
| $1,3\text{-}C_4H_6\text{+}VA$ | 4,5 |
| $C_5\text{-}KW$ | 2,6 |
| $C_6\text{-}C_8\text{-}NA$ | 0,5 |
| Benzol | 5,1 |
| Toluol | 1,4 |
| EB+Xylole | 0,2 |
| Styrol | 0,5 |
| $C_9\text{-}KW$ | 0,2 |
| $C_{10}\text{+-}KW$ | 1,5 |
| Summe | 100,0 |

**Patentansprüche**

1. Verfahren zum Recyclen von Kunststoffabfällen in einem Steamcracker, dadurch gekennzeichnet, daß man eine aus Kunststoffabfällen erhaltene Schmelze bei 400 bis 550°C in Produkte umwandelt, aus den Produkten eine Destillatfraktion bei 180 bis 280°C abtrennt und diese als Einsatzstoff einem Steamcracker zuführt.

2. Verfahren nach Anspruch 1, gekennzeichnet durch nachstehende Verfahrensmerkmale:

   - Aufschmelzen der Kunststoffabfälle,

   - Zuführen der Schmelze in einen Reaktor, wobei bei 400 bis 550°C die Polymere in Produkte umgewandelt werden,

   - destillatives Abtrennen einer Destillatfraktion bei 200 bis 280°C aus den Produkten,

   - Rückführen der übrigen Produkte in den Reaktor bis auf Rückstände und Feststoffe und gegebenenfalls anorganische Säuren und

   - Einleiten der abgetrennten Destillatfraktion, gegebenenfalls nach weiterer Trennung, als Einsatzstoff in den Steamcracker.

3. Verfahren nach Anspruch 1 oder 2, dadurch gekennzeichnet, daß man das destillative Abtrennen der Destillatfraktion aus den Produkten mit den folgenden Verfahrensschritten durchführt:

   - Trennen der Produkte mittels einer direkt dem Reaktor nachgeschalteten 1. Kolonne, in

     - ein bei 300 bis 420°C anfallendes Sumpfprodukt, das nach Ausschleusen der Rückstände und Feststoffe in den Röhrenofen zurückgeführt wird, und in

     - ein bei 200 bis 280°C anfallendes Kopfprodukt, das nach partieller Kondensation einer 2. Kolonne bei 70 bis 150°C zugeführt wird,

   - Trennen des nach der partiellen Kondensation anfallenden Flüssigkeits-/Gasgemisches mittels obiger 2. Kolonne, in

     - ein am Sumpf der 2. Kolonne austretendes Flüssigkeitsgemisch, das einerseits als Rücklauf für die 1.

Kolonne verwendet wird, und andererseits als Einsatzstoff für den Steamcracker verwendet wird, und in

- ein am Kopf der 2. Kolonne austretendes Gasgemisch, das als Einsatzstoff für den Steamcracker verwendet wird.

4. Verfahren zum Recyclen von chlorhaltigen und/oder aromaten-haltigen Kunststoffabfällen in einem Steamcracker nach Anspruch 1 oder 2, gekennzeichnet durch nachstehende Verfahrensmerkmale:

- Aufschmelzen der Kunststoffabfälle bei 280 bis 380°C unter Dehydrohalogenierung des chlorhaltigen Kunststoffes,

- Zuführen der Schmelze in einen Reaktor, wobei bei 410 bis 530°C die Polymere in Produkte umgewandelt werden,

- Trennen obiger Produkte mittels einer direkt dem Reaktor nachgeschalteten 1. Kolonne, in

  - ein bei 330 bis 450°C anfallendes Sumpfprodukt, das nach Ausschleusen der Rückstände und Feststoffe in den Reaktor zurückgeführt wird, und in

  - ein bei 200 bis 280°C anfallendes Kopfprodukt, das nach partieller Kondensation einer 2. Kolonne bei 70 bis 150°C zugeführt wird,

- Trennen des nach der partiellen Kondensation anfallenden Flüssigkeits-/Gasgemisches mittels obiger 2. Kolonne, in

  - ein am Sumpf der 2. Kolonne austretendes Flüssigkeitsgemisch, das einerseits als Rücklauf für die 1. Kolonne verwendet wird, und andererseits einer zur Abtrennung von Aromaten geeigneten Destillations- oder Extraktionseinheit zugeführt wird, und in

  - ein am Kopf der 2. Kolonne austretendes Gasgemisch, das als Einsatzstoff für den Steamcracker verwendet wird.

5. Verfahren nach Anspruch 4, dadurch gekennzeichnet, daß man das der Destillations- oder Extraktionseinheit zugeführte Flüssigkeitsgemisch in

- eine Flüssigfraktion, die als Einsatzstoff für den Steamcracker verwendet wird, und in

- eine Aromatenfraktion auftrennt.

6. Verfahren nach einem der Ansprüche 1 bis 5, dadurch gekennzeichnet, daß als Kunststoffabfall eine Hohlkörperfraktion, bestehend aus Flaschen und Behältern aus im wesentlichen Polyolefinen mit gegebenenfalls anhaftenden Verunreinigungen, Aufklebematerialien, Füllstoffen und/oder Inhaltsresten eingesetzt wird.

7. Verfahren nach Anspruch 1 bis 5, dadurch gekennzeichnet, daß als Kunststoffabfall eine Mixed Plastic Fraktion bestehend im wesentlichen aus Polyoelfinen, Polystyrol und Polyvinylchlorid mit gegebenenfalls anhaftenden Verunreinigungen, Aufklebematerialien, Füllstoffen und/oder Inhaltsresten eingesetzt wird.

8. Verfahren nach einem der Ansprüche 1 bis 5, dadurch gekennzeichnet, daß als Kunststoffabfälle eine Folienfraktion, bestehend im wesentlichen aus Polyethylen, Polypropylen, einschließlich eventueller Verschmutzungen, Aufklebematerialien, Füllstoffen, Inhaltsresten etc., eingesetzt wird.

9. Verfahren nach einem der Ansprüche 1 bis 5, dadurch gekennzeichnet, daß als Kunststoffabfalle eine Leichtfraktion, bestehend im wesentlichen aus Polyethylen, Polypropylen, Polystyrol etc., einschließlich eventueller Verschmutzungen, Aufklebematerialien, Füllstoffen, Inhaltsresten etc., eingesetzt wird.

10. Verfahren nach einem der Ansprüche 1 bis 5, dadurch gekennzeichnet, daß zu den spezifizierten Kunststoffen noch geringe im Müll enthaltende Abfälle, wie beispielsweise Polyurethane, Polyester, Polyamide etc., hinzukommen können.

**Claims**

1. A process for recycling plastic waste in a steam cracker, wherein a melt obtained from plastic waste is converted into products at from 400 to 550°C, and a distillate fraction is separated off from the products at from 180 to 280°C and is fed as a feed material to a steam cracker.

2. A process as claimed in claim 1, wherein

   - the plastic waste is melted,
   - the melt is fed to a reactor where the polymers are converted into products at from 400 to 550°C,
   - a distillate fraction is separated by distillation at from 200 to 280°C from the products,
   - the other products are returned to the reactor, with the exception of residues and solids and any inorganic acids, and
   - the distillate fraction separated off is introduced, if necessary after further separation, as a feed material into the steam cracker.

3. A process as claimed in claim 1 or 2, wherein the distillate fraction is separated by distillation from the products by a process in which

   - the products are separated by means of a 1st column which is directly downstream of the reactor, into

     - a bottom product resulting at from 300 to 420°C, which, after removal of the residues and solids, is returned to the tubular furnace, and into
     - a top product resulting at from 200 to 280°C, which, after partial condensation, is fed to a 2nd column at from 70 to 150°C,

   - the liquid/gas mixture resulting after the partial condensation is separated by means of the above 2nd column into

     - a liquid mixture emerging at the bottom of the 2nd column, which is, on the one hand, returned to the 1st column, and, on the other hand, used as feed material for the steam cracker, and into
     - a gas mixture emerging at the top of the 2nd column, which is used as feed material for the steam cracker.

4. A process for recycling chlorine-containing and/or aromatics-containing plastic waste in a steam cracker as claimed in claim 1 or 2, wherein

   - the plastic waste is melted at from 280 to 380°C with dehydrohalogenation of the chlorine-containing plastic,
   - the melt is fed into a reactor where the polymers are converted at from 410 to 530°C into products,
   - the above products are separated by means of a 1st column which is directly downstream of the reactor into

     - a bottom product resulting at from 330 to 450°C, which, after removal of the residues and solids, is returned to the reactor, and into
     - a top product resulting at from 200 to 280°C, which, after partial condensation, is fed to a 2nd column at from 70 to 150°C,

   - the liquid/gas mixture resulting after the partial condensation is separated by means of the above 2nd column, into

     - a liquid mixture emerging at the bottom of the 2nd column, which is, on the one hand, returned to the 1st column and, on the other hand, fed to a distillation or extraction unit suitable for removing aromatics, and into
     - a gas mixture emerging at the top of the 2nd column, which is used as feed material for the steam cracker.

5. A process as claimed in claim 4, wherein the liquid mixture fed to the distillation or extraction unit is separated into

   - a liquid fraction which is used as feed material for the steam cracker, and into
   - an aromatic fraction.

**EP 0 710 270 B1**

6. A process as claimed in any of claims 1 to 5, wherein the plastic waste employed comprises a blow molded fraction consisting of bottles and containers composed essentially of polyolefins, possibly with adherent soiling, sticky label materials, fillers and/or residual contents.

7. A process as claimed in any of claims 1 to 5, wherein the plastic waste comprises a mixed plastic fraction composed essentially of polyolefins, polystyrene and polyvinyl chloride, possibly with adherent soiling, sticky label materials, fillers and/or residual contents.

8. A process as claimed in any of claims 1 to 5, wherein the plastic waste employed comprises a sheet fraction composed essentially of polyethylene, polypropylene, including possible soiling, sticky label materials, fillers, residual contents etc.

9. A process as claimed in any of claims 1 to 5, wherein the plastic waste employed comprises a light fraction composed essentially of polyethylene, polypropylene, polystyrene etc., including possible soiling, sticky label materials, fillers, residual contents etc.

10. A process as claimed in any of claims 1 to 5, wherein the specified plastics may be mixed with small amounts of waste present in refuse, such as polyurethanes, polyesters, polyamides etc.

**Revendications**

1. Procédé de recyclage de déchets de matières plastiques dans un craqueur à la vapeur d'eau, caractérisé en ce que l'on convertit ou transforme une masse fondue obtenue à partir de déchets de matières plastiques à 400-550°C en produits, en ce que l'on sépare d'avec les produits d'une fraction de distillat à 180-280°C et qu'on envoie cette dernière à un craqueur à la vapeur d'eau à titre de matière première.

2. Procédé suivant la revendication 1, caractérisé par les particularités opératoires suivantes :

   - fusion des déchets de matières plastiques,
   - introduction de la masse fondue dans un réacteur dans lequel on convertit ou transforme les polymères en produits à 400-550°C,
   - séparation par distillation d'avec les produits d'une fraction de distillat à 200-280°C,
   - renvoi des autres produits au réacteur jusqu'à l'obtention de résidu et de substances solides et éventuellement d'acides inorganiques et
   - introduction de la fraction de distillat séparée, éventuellement après séparation plus poussée, à titre de matière de départ dans le craqueur à la vapeur d'eau.

3. Procédé suivant la revendication 1 ou 2, caractérisé en ce que l'on entreprend la séparation par distillation d'avec les produits de la fraction de distillat par les étapes opératoires suivantes :

   - séparation des produits à l'aide d'une première colonne raccordée directement en aval du réacteur, en

     - un produit de fond ou de queue obtenu à 300-420°C, que l'on ramène au four tubulaire après en avoir exclu les résidus et les substances solides et en
     - un produit de tête obtenu à 200-280C, que l'on amène, après condensation partielle, à une seconde colonne à 70-150°C,

   - séparation du mélange liquide/gaz obtenu après la condensation partielle à l'aide de la seconde colonne susmentionnée, en

     - un mélange liquide sortant par le fond de la seconde colonne, que l'on utilise, d'une part, comme produit de recyclage pour la première colonne et, d'autre part, comme matière première pour le craqueur à la vapeur d'eau et en
     - un mélange de gaz sortant en tête de la seconde colonne, que l'on utilise à titre de produit de départ pour le craqueur à la vapeur d'eau.

4. Procédé de recyclage de déchets de matières plastiques contenant du chlore et/ou des composés aromatiques dans un craqueur à la vapeur d'eau, suivant la revendication 1 ou 2, caractérisé par les particularités opératoires suivantes :

- fusion des déchets de matières plastiques à 280-380°C avec déshydrohalogénation de la matière plastique contenant du chlore,
- introduction de la masse fondue dans un réacteur dans lequel les polymères sont convertis ou transformés en produits à 410-530°C,
- séparation des produits susmentionnés à l'aide d'une première colonne raccordée directement en aval du réacteur, en

  - un produit de fond ou de queue obtenu à 330-450°C, que l'on renvoie au réacteur après en avoir exclu les résidus et les matières solides et en
  - un produit de tête obtenu à 200-280°C que l'on envoie, après condensation partielle, à une seconde colonne à 70-150°C,

- séparation du mélange liquide/gaz obtenu après la condensation partielle, à l'aide de la seconde colonne susmentionnée, en

  - un mélange de liquides sortant du fond de la seconde colonne, que l'on utilise, d'une part, comme recyclage pour la première colonne et que, d'autre part, on introduit dans une unité de distillation ou une unité d'extraction convenant à la séparation de substances aromatiques et en
  - un mélange de gaz sortant en tête de la seconde colonne, que l'on utilise à titre de produit de départ pour le craqueur à la vapeur d'eau.

5. Procédé suivant la revendication 4, caractérisé en ce que l'on sépare le mélange de liquides introduit dans l'unité de distillation ou l'unité d'extraction en

- une fraction liquide que l'on utilise comme matière de départ pour le craqueur à la vapeur d'eau et en
- une fraction de substances aromatiques.

6. Procédé suivant l'une quelconque des revendications 1 à 5, caractérisé en ce que l'on utilise, à titre de déchets de matières plastiques, une fraction de corps creux, se composant de bouteilles et de récipients constitués essentiellement de polyoléfines avec éventuellement des impuretés adhérentes, des matières collantes, des charges et/ou des contenus résiduels.

7. Procédé suivant l'une quelconque des revendications 1 à 5, caractérisé en ce que l'on utilise, à titre de déchets de matières plastiques, une fraction de matières plastiques mixtes, essentiellement constituées de polyoléfines, de polystyrène et de poly(chlorure de vinyle) avec éventuellement des impuretés adhérentes, des matières collantes, des charges et/ou des contenus résiduels.

8. Procédé suivant l'une quelconque des revendications 1 à 5, caractérisé en ce que l'on utilise, à titre de déchets de matières plastiques, une fraction de feuilles essentiellement constituée de polyéthylène, de polypropylène, y compris d'éventuelles souillures ou saletés, d'éventuelles matières collantes, d'éventuelles charges, d'éventuels restes de contenus, etc.

9. Procédé suivant l'une quelconque des revendications 1 à 5, caractérisé en ce que l'on utilise, à titre de déchets de matières plastiques, une fraction légère, essentiellement constituée de polyéthylène, de polypropylène, de polystyrène, etc., y compris d'éventuelles souillures ou saletés, d'éventuelles matières collantes, d'éventuelles charges, d'éventuels restes de contenus, etc.

10. Procédé suivant l'une quelconque des revendications 1 à 5, caractérisé en ce qu'en plus des matières plastiques spécifiées, viennent encore s'y ajouter de petites proportions de déchets ou résidus contenus dans les ordures, comme, par exemple, des polyuréthannes, des polyesters, des polyamides, etc.

FIG.1

# FIG.2

EP 0 710 270 B1